(19) Europäisches Patentamt
European Patent Office
Office européen des brevets

(11) Veröffentlichungsnummer: **0 102 023**
**B1**

(12) **EUROPÄISCHE PATENTSCHRIFT**

(45) Veröffentlichungstag der Patentschrift: **06.04.88**

(51) Int. Cl.⁴: **C 07 F 15/06**, C 08 J 5/10

(21) Anmeldenummer: **83108058.5**

(22) Anmeldetag: **16.08.83**

(54) **Cobalt-Bor-Verbindungen, ihre Herstellung und Verwendung.**

(30) Priorität: **27.08.82 DE 3231913**

(43) Veröffentlichungstag der Anmeldung: **07.03.84 Patentblatt 84/10**

(45) Bekanntmachung des Hinweises auf die Patenterteilung: **06.04.88 Patentblatt 88/14**

(84) Benannte Vertragsstaaten: **DE FR GB IT**

(56) Entgegenhaltungen:
**EP-A-0 009 000**
**GB-A-2 022 087**

(73) Patentinhaber: **BAYER AG, Konzernverwaltung RP Patentabteilung, D-5090 Leverkusen 1 Bayerwerk (DE)**

(72) Erfinder: **Schubart, Rüdiger, Dr., Engelsfuhr 27, D-5060 Bergisch- Gladbach (DE)**
Erfinder: **Magg, Hans, Dr., Reginharstrasse 2, D-5060 Bergisch- Gladbach (DE)**

**EP 0 102 023 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Viele technische Gummiartikel, beispielsweise Luftreifen, Förderbänder oder Hochdruckschläuche sind mit verstärkenden Einlagen aus hochkohlenstoffhaltigem Stahl, der häufig in Form von Stahlcorden verwendet wird, ausgestattet.

Um eine gute Leistungsfähigkeit und Lebensdauer der Gegenstände zu gewährleisten, ist eine starke und dauerhafte Bindung zwischen Metall und Gummi erforderlich.

Diese läßt sich ohne ein weiteres Klebemittel nur erzielen, wenn die Filamente des Stahlcordes mit einer dünnen Schicht aus α-Messing oder einer anderen Legierung mit den Hauptbestandteilen Kupfer und Zink oder mit reinem Zink plattiert sind.

Der so augerüstete Cord wird direkt in die in der Regel besonders haftfördernde Zusätze enthaltende Gummimischung einvulkanisiert.

Die gebräuchlichsten Zusätze zur Verbesserung der Bindekraft, im folgenden als "Haftmittel" bezeichnet, lassen sich nach ihrem chemischen Aufbau in zwei Gruppen einteilen.

Die erste Gruppe umfaßt alle Haftmittel, die nur als Mehrkomponentensysteme wirksam sind.

Ihnen ist gemeinsam, daß sie hochaktive Kieselsäuren enthalten.

Die weiteren Komponenten sind Resorcin oder Resorcin-Formaldehydkondensationsprodukte und Formaldehyd abspaltende Verbindungen, wie Hexamethylentetramin, veretherte oder veresterte Methylolmelamine mit verschiedenen Veretherungsgraden bzw. Veresterungsgraden und deren Kondensationsprodukte.

Diese Systeme liefern zwar gute Haftwerte, verursachen jedoch manchmal während der Vulkanisation Dämpfe und Geruchsbelästigung. Ferner wird in erheblichem Maße die Verarbeitbarkeit in den Mischmaschinen, z. B. auf dem Walzenmischer, beeinträchtigt, da das Resorcin, besonders bei Tempeaturen in der Nähe des Schmelzpunktes, zur Sublimation neigt.

Zur zweiten Gruppe sind metallorganische Verbindungen zu zählen, wobei die Verbindungen des Cobalts überwiegen. Vor allem Cobaltseifen, wie sie in der Lackindustrie auch als Sikkative gebräuchlich sind, werden seit längerer Zeit verwendet.

So werden in der FR-PS-1 323 934 verschiedene Cobaltsalze, z. B. Cobaltstearat, Cobaltlinolat oder Cobaltnaphthenat beansprucht. Auch bororganische Cobaltverbindungen, entsprechend der US-PS-3 296 242, sind geeignet. Neben Cobalt kommen als Metalle auch Kupfer, Nickel, Blei oder Zink in Betracht. (Vgl. DE-OS-2 303 674, DE-OS-2 447 853 oder US-PS-4 154 911).

GB-A-2 022 087 beschreibt Sikkative, die aus Verbindungen bestehen, in denen fettsaure Salze bivalenter Metalle über Sauerstoff an Bor zu Komplexen des Typs $B(O\ Me^{II}\ O_2\ C\ R)_3$ gebunden sind. Weitere Verbindungsklassen sind Nickel- und Cobaltkomplexe von Succinylobernsteinsäureestern (EP-OS-0 003 820) oder Übergangsmetallsalze einiger 1,2-Diole (EP-OS-0 009 000).

Einfache organische Salze verbessern die Haftung einer Kautschukmasse an metallischen Trägermaterialien im allgemeinen nicht, sondern setzen im Gegenteil als Kautschukgifte die Stabilität des Gummi-Metall-Verbundes oft herab.

In ihrer Wirkung bestehen deutliche Unterschiede zwischen den Haftmitteln der ersten und denen der zweiten Gruppe.

Metallorganische Verbindungen, der Kautschukmischung zugesetzt, führen in der Regel nach der Vulkanisation zu der besseren Metall-Gummihaftung und können außerdem die Korrosion des metallischen Trägers nachhaltig verzögern.

Ihr wesentlicher Nachteil liegt jedoch darin, daß insbesondere bei der Hochtemperaturvulkanisation (180 - 240°C) die Haftfestigkeit stark zurückgeht. Auch macht sich die Reversion stark nachteilig bemerkbar.

Bei den Haftmitteln der ersten Gruppe besteht dagegen bessere Resistenz der Gummi-Metallbindung gegen Nachheizvorgänge. Auch sind solche Verbunde zu den Haftmitteln der 2. Gruppe gegen Wärme und Feuchtigkeitseinflüsse weniger unempfindlich.

Häufig werden deshalb auch Haftmittelkombinationen den Haftmischungen zugesetzt, wobei entweder einzelne Komponenten eines Haftsystems oder das Haftsystem insgesamt eingesetzt werden kann (DE-OS-1 720 144; DE-OS-2 841 401).

Ein Nachteil bei allen, dem Stand der Technik entsprechenden Haftsystemen, ist die Empfindlichkeit der durch sie bewirkten oder geförderten Gummi-Metall-Bindung gegen Einflüsse von Feuchtigkeit oder von Feuchtigkeit zusammen mit Wärme.

Es besteht daher Interesse an einem Haftsystem mit größtmöglicher Resistenz gegen solche Einflüsse.

Aufgabe der Erfindung ist es daher, ein Haftsystem für die Kautschuk-Metallhaftung bereitzustellen, das obige Nachteile nicht bzw. nicht im bisherigen Maße aufweist.

Es wurden nun neue Cobaltverbindungen gefunden, die sich hervorragend für solche Haftsysteme eignen.

Gegenstand der Erfindung sind daher Verbindungen der Formel

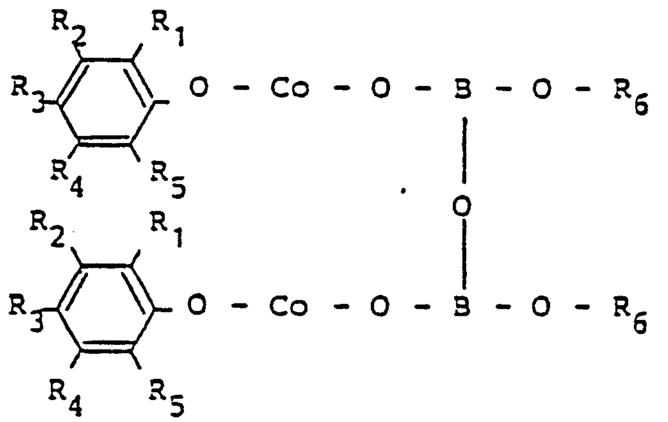

(I),

worin $R_1$, $R_2$, $R_3$, $R_4$ und $R_5$ gleich oder verschieden sind und Wasserstoff, $C_6$-$C_{12}$-Alkyl, $C_6$-$C_{14}$-Aryl, $C_6$-$C_{14}$-Aryl-$C_1$-$C_4$-alkyl,
und $R_6$ einen 1 bis 22 Kohlenstoffatome aufweisenden linearen oder verzweigten, gesättigten oder ein- oder mehrfach ungesättigten Kohlenwasserstoffrest bedeuten.

Die Verbindungen der Formel I werden erhalten, indem man
a) ein Cobaltsalz einer $C_1$-$C_4$-Carbonsäure,
b) ein gegebenenfalls substituiertes Phenol,
c) einen Borsäuretrialkylester und
d) gegebenenfalls einen linearen oder verzweigten, gesättigten oder ein- oder mehrfach ungesättigten $C_8$-$C_{22}$-Alkohol
unter Erhitzen umsetzt.

Die Komponenten werden vorzugsweise in solchen Mengen miteinander umgesetzt, daß auf ein Mol Cobaltsalz ein Mol Borsäurealkylester, ein bis zwei Mole Phenol und 0 bis 1 Mol $C_8$-$C_{22}$-Alkohol kommen, wobei die Summe aus den Komponenten b) und d) maximal 2 Mol beträgt.

Der Borsäuretrialkylester kann als solcher eingesetzt oder im Reaktionsgemisch aus Borsäuretrioxid und der Komponente d) oder einem $C_1$-$C_7$-Alkohol, der auch im Überschuß zugegeben werden kann, hergestellt werden. Überschüssiger $C_1$-$C_7$-Alkohol und aus dem Borsäuretrialkylester frei werdender Alkohol wird abdestilliert.

Die Erfindung betrifft ferner ein Verfahren zur Verbindung von Kautschuk und Metallen, dadurch gekennzeichnet, daß man dem Kautschuk eine Verbindung der Formel I zusetzt. Solche Verbundmaterialien zeigen eine verbesserte Haftfestigkeit verglichen mit analogen Verbundmaterialien, die ein bekanntes Haftmittel enthalten.

Als Carbonsäurekomponente des Cobaltsalzes seien bevorzugt erwähnt: Essigsäure, Ameisensäure, Propionsäure oder Buttersäure, insbesondere Essigsäure.

Die Verbindungen können als Isomerengemisch vorliegen.

Bevorzugte Verbindungen b) sind Butylphenol, Propylphenol, Octylphenol, Nonylphenol, Benzylphenol, Dodecylphenol und Tolylkresol; besonders bevorzugt sind Nonylphenol, Dodecylphenol, Tolylkresol und Benzylphenol. Diese Verbindungen können als Reinstoffe oder als Isomerengemische eingesetzt werden.

Bevorzugte $C_8$-$C_{22}$-Alkohole sind n-Octanol, 2-Ethylhexanol, n-Nonanol, Trimethylhexanol (technisches Isomerengemisch), Decanol, Undecanol, Dodecanol, Tridecanol, Tetradecanol, Pentadecanol, Hexadecanol, Heptadecanol, Octadecanol, Octadecenylalkohol, Nonadecanol oder $C_{20}$-iger bis $C_{22}$-iger Alkohole, Oleinalkohol sowie Gemische aus gesättigten oder ein- oder mehrfach ungesättigten $C_{10}$-$C_{22}$-Alkoholen, insbesondere natürliche und technische Gemische.

Die Alkylreste der Borsäuretrialkylester enthalten insbesondere 1 bis 8, vorzugsweise 3 bis 5 C-Atome. Ganz besonders bevorzugt ist Isobutyl.

Das Haftsystem liefert gute Haftwerte, verbessert deutlich die Alterungswerte des Kautschukartikel (z. B. Dampfalterung) und reduziert die Reversion.

Das Haftsystem wird dem Kautschuk in dem für diese Systeme üblichen Mengenbereich zugegeben. Im allgemeinen sind es 0,1 bis 20 Gew.-%, bevorzugt 0,2 bis 10 Gew.-%, insbesondere 0,3 bis 5 Gew.-%, bezogen auf Kautschuk.

Die Herstellung der Verbindungen der Formel I ist eine Drei- bis Fünfkomponentenreaktion. Folgende Kombinationen von Ausgangsmaterialien sind bevorzugt, wobei als Cobaltsalz stets Cobaltacetat-Tetrahydrat eingesetzt wird.

| Nr. | Bor-Verbindung | Phenol | Alkohol |
|---|---|---|---|
| 1 | Tributylester | Nonylphenol | - |
| 2 | Tri-2-ethylhexylester | Nonylphenol | - |
| 3 | Tri-(trimethylhexyl)ester | Nonylphenol | - |
| 4 | Tributylester | isom.-p-Tolylphenol | - |
| 5 | Tri-(trimethylhexyl)ester | isom.-p-Tolylphenol | - |
| 6 | Tri-2-ethylhexylester | isom.-p-Tolylphenol | - |
| 7 | Tri-isobutylester | isom.-p-Tolylphenol | - |
| 8 | Tri-isobutylester | Nonylphenol | Tetradecanol |
| 9 | Trioxid/Isobutanol | Nonylphenol | Tetradecanol |
| 10 | Tri-isobutylester | Nonylphenol | Stearylalkohol |
| 11 | Tri-isobutylester | Nonylphenol | $C_{14}$-$C_{22}$-Fettalkoholgemisch |
| 12 | Tri-isobutylester | Nonylphenol | 9-Octadecenylalkohol* |
| 13 | Tri-isobutylester | Nonylphenol | $C_{12}$-$C_{18}$-Fettalkoholgemisch |
| 14 | Tri-isobutylester | isom.-p-Tolylphenol | Dodecanol |
| 15 | Tri-isobutylester | Nonylphenol | Dodecanol |
| 16 | Tri-isobutylester | Dodecylphenol | Dodecanol |

* 90 % 9-Octadecenylalkohol sowie verschiedene $C_8$-$C_{22}$-Alkohole

Besonders bevorzugte Produkte sind 2, 3, 8, 9, 10, 11, 12, 13, 15 und 16.

Das Verfahren sei an folgendem Beispiel erläutert:

249 g Cobaltacetat-Tetrahydrat werden mit 220 g Nonylphenol (technisches Isomerengemisch) vermischt und unter Rühren bei Normaldruck bis 200°C in einer Apparatur mit einer Kolonne erhitzt. Das Kristallwasser wird dabei abgespalten. Anschließend wird auf 140 - 160°C abgekühlt und mehrere Stunden im Vakuum gerührt, um Reste von Feuchtigkeit zu entfernen.

Dann gibt man ein Gemisch aus 230 g Borsäuretriisobutylester und 214 g Tetradecanol zu ( kann bei 140°C geschehen) und heitzt langsam weiter auf. Nach kurzem anfänglichen Schäumen destilliert ein flüchtiges Reaktionsprodukt bei 90 - 115°C ab. Die Innentemperatur wird langsam gesteigert, wie die Destillation des flüchtigen Produktes aus Isobutanol und Isobutylacetat nachläßt. Bei einer Innentemperatur von 220 - 240°C ist die Destillation des flüchtigen Gemisches nach einiger Zeit zu Ende. Es wird noch 2 - 3 h nachgerührt, auf 200°C abgekühlt und evakuiert. Man erhält 560 g dunkelblaues, niedrigviskoses Öl folgender elementaranalytischer Zusammensetzung:

| | |
|---|---|
| C gef. | 64.7 % |
| H | 9.9 |
| B | 2.1 |
| Co | 11.0 |

Die oben angeführte Entwässerung des Cobaltsalzes kann auch durch azeotrope Destillation mittels Toluol oder Xylol erfolgen.

Eine Variante besteht darin, anstelle des Borsäuretrialkylesters die äquimolare Menge Borsäuretrioxid und überschüssiges Isobutanol einzusetzen.

Eine zusätzliche Verbesserung der Haftfestigkeit läßt sich erreichen, wenn außer der Verbindung der Formel I eine Formaldehyd abgebende Verbindung dem Kautschuk in Mengen von 0,01 bis 10 Gew.-%, bevorzugt 1 - 3 Gew.-%, bezogen auf Kautschuk zugesetzt wird.

Darüber hinaus können auch Resorcin oder seine Derivate wie Dimethoxybenzol, Diacetoxybenzol, Dibenzoyloxybenzol, Dipropoxybenzol, Dipropionyloxybenzol, Di(Trimethylsilyloxy)benzol, sowie Sulfoester, Phosphorsäureester, Phophorigsäureester und Urethane sowie Carbonate des Resorcins in Mengen von 0,01 bis 10 Gew.-%, bevorzugt 0,5 bis 5 Gew.-%, bezogen auf Kautschuk, dem Kautschuk zugesetzt werden.

Dabei kann die Resorcinverbindung getrennt oder in Kombination mit der Formaldehyd abgebenden Verbindung dem Kautschuk zugesetzt werden. Weiterhin ist es auch möglich, mit Formaldehyd vorkondensiertes Resorcin in Mengen von 0,01 bis 10 Gew.-%, bevorzugt 3 - 5 Gew.-%, bezogen auf Kautschuk zuzugeben, wobei das Vorkondensat pro Mol Resorcin 1 - 3 Mol Formaldehyd enthält.

Weiterhin kann Kieselsäure in den üblichen Mengen zugegeben werden.

Unter Formaldehyd abspaltenden Verbindungen sind solche Substanzen zu verstehen, die beim Erhitzen, z. B. bei Temperaturen im Bereich von 40 bis 200°C, insbesondere unter Vulkanisationsbedingungen, gegebenenfalls in Gegenwart von Wasser, Formaldehyd abspalten können. Bei Verwendung von Methylolestern können auch Kondensationsreaktionen unter Abspaltung von Alkoholen oder Säuren eintreten. Die Formaldehyd abspaltenden Verbindungen sind allgemein unbekannt und werden beispielsweise in BE-PS-621 923, 624 519, US-PS-2 512 128, "Helvetica chimica acta", 24, S. 315 E, CH-PS-197 486 und Houben-Weyl, "Methoden der organischen Chemie", Bd. 8, S. 242 beschrieben.

Besonders hohe Haftungen wurden mit Hexamethylolmelamin, Hexamethylolmelamin-pentamethylether, Gemische von Hexamethylolmelamin-tetramethylether und -trimethylether, Pentamethylolmelamintrimethylether, Tetramethylolhydrazodicarbonamid, Tetramethylol-acetylendiharnstoff, N,N'-Dimethylol-harnstoff, N-Methyloldicyandiamid, Methylenamino-acetinitril, N-Allyl-di-oxazin, N-Phenyldioxazin, 1-Aza-3,7-di-oxa-bicyclo[3,3]-octan, Hexamethylentetramin erzielt.

Die mit obiger Haftmittel-Kombination versehenen Kautschukmassen führen zu ausgezeichneten Häfteigenschaften gegenüber Eisen, Kupfer, Messing, Zink, Bronze, Aluminium und anderer Verstärkermetalle. Typische Kautschukarten, die sich für solche Haftmischungen einsetzen lassen, sind Kautschuke vom Dien-Typ wie Naturkautschuk, Polyisopren, Polybutadien, Styrolbutadien-Copolymere, Acrylnitril-Butadien-Kautschuk, Chloropren-Kautschuk, EPDM und Mischungen dieser genannten Typem.

Die Kautschukmischungen sollen die üblichen Bestandteile, zu denen verstärkende Ruße, inaktive und aktive Füllstoffe, wie beispielsweise Kieselsäuren und Zinkoxid, Verarbeitungshilfsmittel, Schwefel und Vulkanisationsbeschleuniger enthalten.

Als Beschleuniger eignen sich besonders Sulfenamide, die sich vom 2-Mercaptobenzthiazol ableiten, wie beispielsweise N-Cyclohexyl-thiobenzthiazol, N-Morpholino-thiobenzthiazol, N,N-Dicyclohexyl-thiobenzthiazol oder N,N-Diisopropylaminothiobenzthiazol. Natürlich können auch andere Beschleuniger allein oder in Kombination verwendet werden. Beispiele sind Thiurame, Mercaptobenzthiazol oder Dithiocarbamate.

Die Vulkanisatiomstemperatur wird in praxisgerechter Weise ausgewählt, z. B. 120 - 220°C, bevorzugt 140 - 180°C.

Die Haftmittelwirkung wird durch die folgenden Beispiele erläutert.

Dabei wird von folgender Mischungszusammensetzung ausgegangen:

| | | |
|---|---|---|
| Naturkautschuk (RSS 1) | 100 | Gew.-T. |
| Ruß N 326 | 43 | " |
| Ruß N 539 | 20 | " |
| Kolophonium | 3 | " |
| Phenyl-β-naphthylamin | 1,5 | " |
| Zinkoxid | 10 | " |
| Schwefel | 7 | " |
| N,N-Dicyclohexyl-thiobenzthiazol | 0,7 | " |

Die schwefel- und beschleunigerfreie Grundmischung wird in einem Labor-Innenmischer bei 70°C vorgemischt und anschließend mit Schwefel, Beschleuniger und gegebenenfalls Haftmittel auf einem Labormischwerk bei einer Walzentemperatur von 60°C vermischt.

Für die Prüfung der Haftung nach der T-Testmethode (vgl. Bayer-Mitteilungen für die Gummi-Industrie, Nr. 29, von 1961, S. 69) werden Prüfkörper mit den Abmessungen 20 x 15 x 6 mm hergestellt.

Es werden Stahlcorde mit vermessingter Oberfläche in der Konstruktion 7 x 3 x 0,15 mm verwendet.

Die Vulkanisation der Prüfkörper erfolgt bei 150°C entsprechend dem $t_{90}$-Wert. Für die Alterung werden die Prüfkörper mehrere Tage in Heißluft bei 100°C, einige Stunden dem Heißdampf bei 120°C ausgesetzt oder auch mehrere Monate bei 40°C und 95 % rel. Luftfeuchte gelagert.

Falls erforderlich, wird die Kautschukmischung bei 180°C 45 min über das Vulkanisationsoptimum hinaus vulkanisiert.

Die Haftwerte werden bei 80°C Prüftemperatur mit Hilfe eines Zugprüfgerätes bei einer Klemmenabzugsgeschwindigkeit von 100 mm/min. ermittelt. Sie werden als die für das Herausreißen des Cordes aus der Gummiprobe erforderliche maximale Kraft in N/20 mm angegeben. Zu einer Messung werden mindestens 4 Prüfkörper mit gleichem Aufbau herangezogen, wobei aus diesen Einzelwerten der Medianwert ($\tilde{X}$) nach Maßgabe von DIN 53 598 und als Maß für die Streuung die Differenz aus dem höchsten und niedrigsten Einzelwert die Spannweite (R) zur Auswertung gelangt.

Darüber hinaus wird nach Durchführung des Trennversuches die Bedeckung des Festigkeitsträgers mit Gummi C) visuell begutachtet.

Das Beobachtungsergebnis wird durch röm. Ziffern bzw. durch Buchstaben, die folgender Zuordnung genügen, festgehalten:

| | |
|---|---|
| I | Festigkeitsträger ohne jede Gummibedeckung |
| II | Festigkeitsträger geringfügig mit Gummi bedeckt |
| III | Festigkeitsträger überwiegend mit Gummi bedeckt |
| IV | Strukturbruch im Gummi |
| GR | Vollständige Umsetzung der Messingschicht, blanker Stahl an der Oberfläche. |

In Tabelle 1 wird der haftverbessernde Einfluß einiger der erfindungsgemäßen Verbindungen gezeigt.

**Tabelle 1**

| Verbindg.-Nr. | Co-Gehalt*) | Testmischung mit erfindungsgemäßem Haftmittel X̄ (N/20 mm) | R (N/20 mm) | C | Zugehörige Testmischung ohne Haftmittel X̄ (N/20 mm) | R (N/20 mm) | C | Haftverbesserung X (N/20 mm) |
|---|---|---|---|---|---|---|---|---|
| 1 | 0,3 | 460 | 50 | IV | 400 | 115 | III | 60 |
| 1 | 0,1 | 390 | 75 | IV | 335 | 50 | III | 55 |
| 2 | 0,3 | 485 | 50 | IV | 400 | 115 | III | 85 |
| 2 | 0,1 | 380 | 40 | III | 335 | 50 | III | 55 |
| 4 | 0,3 | 400 | 40 | IV | 340 | 60 | III | 60 |
| 8 | 0,1 | 405 | 40 | IV | 350 | 50 | III | 55 |
| 15 | 0,3 | 390 | 70 | IV | 360 | 70 | III | 30 |
| Vergleich | 0,1 | 430 | 80 | IV | 385 | 80 | III | 45 |

*) in Gew.-% Cobaltmetall, bezogen auf Polymer

Unter "Vergleich" sind die entsprechenden werte mit Cobalt-naphthenat als haftverbessernder Substanz wiedergegeben.

Die Zahlenwerte zeigen, daß bei Verwendung einer erfindungsgemäßen Verbindung an vermessingten Stahlcorden Haftverbesserungen erzielt werden, die den Stand der Technik erreichen und in einigen Fällen übertreffen.

Bekanntlich bildet sich bei der Vulkanisation von schwefelhaltigen Kautschukmischungen zusammen mit Festigkeitsträgern mit vermessingter Oberfläche durch Umsetzung des Kupfers mit Schwefel eine haftfördernde Schicht (vgl. S. Buchan, Rubber to Metal Bonding, Palmerton Publishing Company, New York, (1959)), die besonders empfindlich gegen Einflüsse von Feuchtigkeit und Wärme ist (vgl. W. J. van OOij, Rub. Chem. Techn. 51, 52 (1978)).

In Tabelle 2 wird demonstriert, daß die Verwendung der erfindungsgemäßen Verbindungen die Zerstörung der Haftschicht, hervorgerufen durch Feuchtigkeit und Wärme, nachhaltig verzögert.

Hinsichtlich dieser stabilisierenden Wirkung wird gefunden, daß die erfindungsgemäßen Verbindungen einen bedeutenden Vorteil gegenüber dem Stand der Technik bieten.

**Tabelle 2**

| Verbundungs-Nr. | Co-Gehalt*) | Testmischung vulkanisiert entsprechend dem $t_{90}$-Wert X̄ (N/20 mm) | R (N/20 mm) | C | Testmischung vulkanisiert entsprechend dem $t_{90}$-Wert u. gealt. i. Heißdampf (2d/120° C) X̄ (N/20 mm) | R (N/20 mm) | C | X̄ rel. (%)**) |
|---|---|---|---|---|---|---|---|---|
| - | - | 340 | 60 | III | 100 | 10 | GR | 71 |
| 2 | 0,3 | 380 | 40 | III | 320 | 30 | II | 16 |
| 4 | 0,3 | 400 | 40 | IV | 310 | 70 | II | 22,5 |
| 8 | 0,3 | 400 | 55 | IV | 330 | 40 | II | 17,5 |
| 11 | 0,3 | 370 | 60 | IV | 285 | 80 | II | 23 |
| 16 | 0,3 | 380 | 40 | IV | 290 | 50 | III | 24 |
| 12 | 0,3 | 370 | 70 | IV | 260 | 70 | III | 29 |
| Vergleich Cobalt-naphthenat | 0,3 | 380 | 90 | IV | 160 | 20 | II | 57 |

*) in Gew.-% Cobaltmetall, bezogen auf Polymer

**) $X\ rel. = \frac{X\ (vulkanisiert - t_{90}\text{-}Wert) - X\ (im\ Heißdampf\ gealtert)\ 100}{X\ (vulkanisiert - t_{90}\text{-}Wert)}$

Darüber hinaus zeichnen sich die Haftmittel der vorgenannten Art durch ein insgesamt ausgewogenes Eigenschaftsbild aus.

In Tabelle 3 wird anhand dreier beispielhafter Verbindungen gezeigt, daß die Verbindung selbst bei den verschiedensten Beanspruchungen, wie thermische Nachheizung und Einfluß von Feuchtigkeit bei praxisgerechten Temperaturen, haftwirksam bleibt.

Die dabei verwendete Menge des Haftmittels in der Gummimischung entsprach 0,3 Gew.-% Cobalt-Metall, bezogen auf Polymer.

**Tabelle 3**

| | Beipiel 8 | Beispiel 3 | Beispiel 2 |
|---|---|---|---|
| Vulkanisation entsprechend dem $t_{90}$-Wert der Mischung | | | |
| X̄ (N/20 mm) | 380 | 380 | 380 |
| R (N/20 mm) | 80 | 30 | 45 |
| C | III | III | III |
| Zusätzliche Alterung im Geerofen; Dauer: 6 Tage | | | |
| X̄ (N/20 mm) | 360 | | |
| R (N/20 mm) | 55 | | |
| C | III | | |
| Zusätzliche Alterung im Heißdampf bei 120°C Dauer: 4 Tage | | | |
| X̄ (N/20 mm) | 275 | 320 | 320 |
| R (N/20 mm) | 60 | 30 | 60 |
| C | IV | III | IV |
| Zusätzliche Alterung in feuchter Atmosphäre (95 % RH) bei 40°C; Dauer: 1 Monat | | | |
| X̄ (N/20 mm) | 330 | 300 | 310 |
| R (N/20 mm) | 60 | 70 | 80 |
| C | III | II | III |
| Vulkanisation bei 180°C 45 Min. länger als dem $t_{90}$-Wert entspricht | | | |
| X̄ (N/20 mm) | 280 | 280 | 280 |
| R (N/20 mm) | 25 | 75 | 30 |
| C | III | III | III |

Auch in Kombination mit Haftmitteln des Typs "Mehrkomponentensystem" ist die Verwendung der erfindungsgemäßen Haftmittel vorteilhaft.

Die Resistenz der Haftung gegen thermische und feuchte Beanspruchung ist dabei ebenfalls erheblich verbessert. Für die nachstehend angeführten Daten wird folgende Testrezeptur verwendet. Die übrigen Prüfbedingungen bleiben unverändert.

| | | |
|---|---|---|
| Naturkautschuk (RSS1) | 100 | Gew.-Teile |
| Ruß N-330 | 50 | " |
| Hochaktive gefällte Kieselsäure | 10 | " |
| Phenol-Formaldehyd-Harz | 4 | " |
| Isopropyl-phenyl-p-phenylendiamin | 2,5 | " |
| Zinkoxid | 6 | " |
| Resorcin | 2 | " |
| Hexamethylolmelaminpentamethylether (HMMM) | 2 | " |
| Schwefel | 4,5 | " |
| N,N-Dicyclohexyl-thiobenzthiazol | 2 | " |
| N-Cyclohexyl-thiophthalimid | 0,3 | " |
| Haftmittel | wie angegeben | |

**Tabelle 4**

<table>
<tr><th></th><th colspan="2">Vulkanisation entsprechend dem $t_{90}$-Wert der Mischung</th><th colspan="2">Zusätzliche Alterung im Heißdampf bei 120°C, Dauer = 2 Tage</th></tr>
<tr><th></th><th>Beispiel 8</th><th>Beispiel 3</th><th>Beispiel 8</th><th>Beispiel 3</th></tr>
<tr><td>Resorcin + HMMM</td><td></td><td></td><td></td><td></td></tr>
<tr><td>X̄ (N/20 mm)</td><td colspan="2">345</td><td></td><td>170</td></tr>
<tr><td>R (N/20 mm)</td><td colspan="2">40</td><td></td><td>30</td></tr>
<tr><td>C</td><td colspan="2">IV</td><td></td><td>GR</td></tr>
<tr><td>Resorcin + HMMM + erfindungsgemäßes Haftmittel</td><td></td><td></td><td></td><td></td></tr>
<tr><td>X̄ (N/20 mm)</td><td>365</td><td>370</td><td>295</td><td>225</td></tr>
<tr><td>R (N/20 mm)</td><td>70</td><td>68</td><td>35</td><td>40</td></tr>
<tr><td>C</td><td>IV</td><td>IV</td><td>II</td><td>I</td></tr>
</table>

**Patentansprüche**

1. Verbindungen der Formel

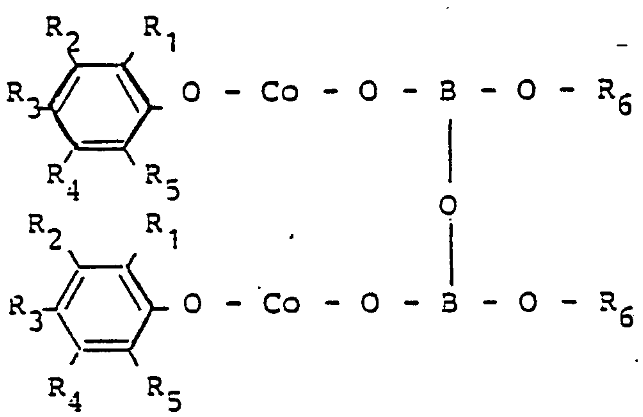

(I),

worin $R_1$, $R_2$, $R_3$, $R_4$ und $R_5$ gleich oder verschieden sind und Wasserstoff, $C_6$-$C_{12}$-Alkyl, $C_6$-$C_{14}$-Aryl, $C_6$-$C_{14}$-Aryl-$C_1$-$C_4$-alkyl,

und $R_6$ einen 1 bis 22 Kohlenstoffatome aufweisenden linearen oder verzweigten, gesättigten oder ein- oder mehrfach ungesättigten Kohlenwasserstoffrest

bedeuten.

2. Verbindungen nach Anspruch 1, die pro Boratom einen Rest der Formel

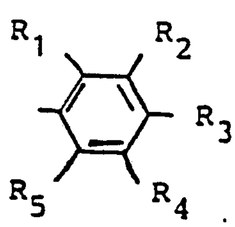

.

enthalten.

3. Verfahren zur Herstellung von Verbindungen gemäß Anspruch 1, dadurch gekennzeichnet, daß man

a) ein Cobaltsalz einer $C_1$-$C_4$-Carbonsäure,

b) ein gegebenenfalls substituiertes Phenol,

c) einen Borsäuretrialkylester und

d) gegebenenfalls einen linearen oder verzweigten, gesättigten oder ein- oder mehrfach ungesättigten $C_8$-$C_{22}$ -Alkohols

unter Erhitzen umsetzt.

4. Verfahren nach Anspruch 3, dadurch gekennzeichnet, daß man die Komponenten in solchen Mengen miteinander umsetzt, daß auf ein Mol Cobaltsalz ein Mol Borsäurealkylester, ein bis zwei Mol Phenol und 0 bis 1

Mol $C_8$-$C_{22}$-Alkohol kommen, wobei die Summe aus den Komponenten b) und d) maximal 2 Mol beträgt.

5. Verfahren zur Verbindung von Kautschuk und Metallen, wobei man den Kautschuk in üblicher Weise auf das Metall aufbringt, dadurch gekennzeichnet, daß man dem Kautschuk zuvor eine Verbindung gemäß Anspruch 1 zusetzt.

6. Verfahren nach Anspruch 5, dadurch gekennzeichnet, daß man dem Kautschuk zuvor zusätzlich eine Formaldehyd abgebende Verbindung zusetzt.

**Claims**

1. Compounds corresponding to the following formula

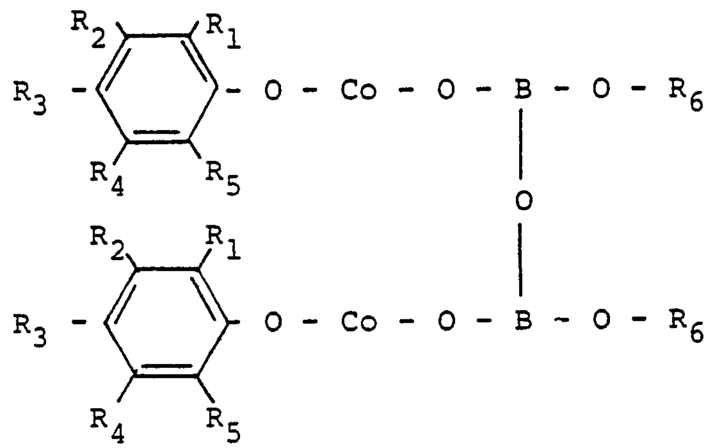

(I)

in which

$R_1$, $R_2$, $R_3$, $R_4$ and $R_5$ may be the same or different and represent hydrogen, $C_6$-$C_{12}$ alkyl, $C_6$-$C_{14}$ aryl, $C_6$-$C_{14}$ aryl-$C_1$-$C_4$ alkyl and

$R_6$ represents a $C_1$-$C_{22}$ linear or branched, saturated or mono- or polyunsaturated hydrocarbon radical.

2. Compounds according to Claim 1 which contain one radical corresponding to the following formula

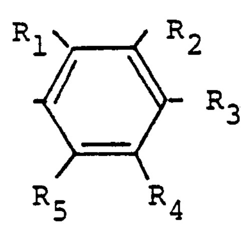

per boron atom.

3. A process for the preparation of compounds according to Claim 1, characterized in that

a) a cobalt salt of a $C_1$-$C_4$ carboxylic acid,

b) an optionally substituted phenol,

c) a boric acid trialkyl ester and

d) optionally a linear or branched, saturated or mono- or polyunsaturated $C_8$-$C_{22}$ alcohol

are reacted while heating.

4. A process as claimed in Claim 3, characterized in that the components are reacted with one another in such quantities that there are one mole boric acid alkyl ester, one to two moles phenol and 0 to 1 mole $C_8$-$C_{22}$ alcohol per mole cobalt salt, the sum of components b) and d) being at most 2 moles.

5. A process for bonding rubber and metals in which the rubber is applied to the metal in the usual way, characterized in that a compound according to Claim 1 is added to the rubber beforehand.

6. A process as claimed in Claim 5, characterized in that a formaldehyde-yielding compound is also added to the rubber beforehand.

**Revendications**

1. Composés de formule

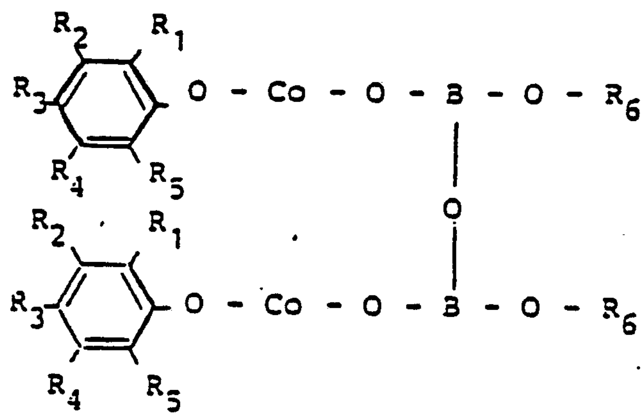

(I),

dans laquelle

$R_1$, $R_2$, $R_3$, $R_4$ et $R_5$ sont identiques ou différents et représentent l'hydrogène, un groupe alkyle en $C_6$ à $C_{12}$, aryle en $C_6$ à $C_{14}$, (aryle en $C_6$ à $C_{14}$)-alkyle en $C_1$ à $C_4$, et

$R_6$ est un reste hydrocarboné linéaire ou ramifié, saturé ou à une seule ou plusieurs insaturations, présentant 1 à 22 atomes de carbone.

2. Composés suivant la revendication 1, qui contiennent par atome de bore un reste de formule

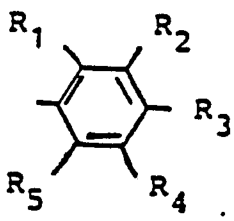

.

3. Procédé de production de composés suivant la revendication 1, caractérisé en ce qu'on fait réagir en chauffant

a) un sel de cobalt d'un acide carboxylique en $C_1$ à $C_4$,

b) un phénol éventuellement substitué,

c) un ester trialkylique de l'acide borique et

d) le cas échéant, un alcool en $C_8$ à $C_{22}$ linéaire ou ramifié, saturé ou à une ou plusieurs insaturations.

4. Procédé suivant la revendication 3, caractérisé en ce qu'on fait réagir les composants ensemble en quantités choisies de manière qu'il y ait par mole de sel de cobalt 1 mole d'ester alkylique d'acide borique, 1 à 2 moles de phénol et 0 à 1 mole d'alcool en $C_8$ à $C_{22}$, la somme des composants b) et d) s'élevant au maximum à 2 moles.

5. Procédé pour la liaison de caoutchouc et de métaux, dans lequel on applique le caoutchouc de manière classique sur le métal, caractérisé en ce qu'on ajoute, au préalable, au caoutchouc un composé suivant la revendication 1.

6. Procédé suivant la revendication 5, caractérisé en ce qu'on ajoute en outre préalablement au caoutchouc un composé libérant du formaldéhyde.